(19) Europäisches Patentamt
European Patent Office
Office européen des brevets

(11) EP 1 394 211 A1

(12) **EUROPEAN PATENT APPLICATION**

(43) Date of publication:
**03.03.2004 Bulletin 2004/10**

(51) Int Cl.[7]: **C08L 51/04**, C08L 27/06

(21) Application number: **03255012.1**

(22) Date of filing: **13.08.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **26.08.2002 US 405948 P**

(71) Applicant: **ROHM AND HAAS COMPANY**
**Philadelphia, Pennsylvania 19106-2399 (US)**

(72) Inventor: **Chirgott, Paul Steve**
**Strongsvile, Ohio 44136 (US)**

(74) Representative: **Kent, Venetia Katherine**
**Rohm and Haas (UK) Ltd**
**European Operations Patent Dept.**
**Lennig House**
**2 Mason's Avenue**
**Croydon, CR9 3NB (GB)**

Remarks:
The application is published as filed without claim number 4 due to a typographical error in the numbering of claims. (Article 93 (2) EPC).

(54) **Impact Modifier Compositions with improved powder characteristics**

(57) The invention provides polymeric compositions having an MBS resin in the form of a powder prepared by: coagulating an MBS resin having the following compositional relationships:

a)

$$-1.5x + 140 \leq y \leq -1.65x + 180,$$

and

b)

$$55 \leq x \leq 70\ ,$$

where x is the butadiene content of the MBS resin; and y is the Vicat softening point of the MBS resin; adding to the coagulated MBS resin 0.1 to 10 parts of a hard polymer; and recovering a powder from the mixture. In an embodiment where the concentration of butadiene ranges from 30 to 70 weight percent, at least one of the following also exists:

1. at least a portion of the MBS particles has a void-containing rubber portion,

2. the polymeric composition includes at least one of the following:

a. at least 1 weight percent of a processing oil component,

b. at least 2 weight percent of a processing aid component, or

c. at least two different populations of polymeric particles, wherein each has a rubber-containing portion, and wherein the difference is in at least one of the following: the void concentration in the rubber-containing portions of each population, the chemical composition of each population, the average particle size of each population, or the shape of each population.

The invention further provides thermoplastic resin systems including a plastic resin component and at least one of the above polymeric compositions.

EP 1 394 211 A1

## Description

The present invention relates to a synthetic resin having improved powder characteristics. More particularly, the present invention relates to methyl methacrylate/butadiene/styrene copolymer resins useful as an impact modifier for thermoplastic resin composition, and to thermoplastic resins made using one of the methyl methacrylate/butadiene/styrene copolymer resins.

Conventional thermoplastic resins, for example, vinyl chloride resins such as polyvinyl chloride; acrylic resins such as polymethyl methacrylate; aromatic vinyl resins such as polystyrene and styrene-acrylonitrile copolymer; carbonate resins such as polycarbonate; amide resins such as Nylon 6; polyester resins such as polyethylene terephthalate; olefin resins such as polypropylene; and polymer alloys of those resins, for example, alloy of styrene-acrylonitrile copolymer and polycarbonate, alloy of α-methylstyrene-acrylonitrile copolymer and polyvinyl chloride and alloy of polystyrene and polyphenylene oxide are inherently low in impact resistance. In order to improve impact resistance of those resins and alloys thereof, generally there have been widely employed methods for adding, to rubber particles, methyl methacrylate/butadiene/styrene copolymer (hereinafter an "MBS" resin). Though the degree of improvement of impact resistance by the addition of MBS resins is remarkable, for further improving the impact resistance efficiently, there have been made many proposals of improving such MBS resins.

As a general method to further improve the impact strength of thermoplastic resins with MBS resins, it has been conventionally adopted to increase the proportion of a rubber to be used in the MBS resins, namely to increase the proportion of butadiene (Bd). However, if the content of Bd units in the MBS resins is increased too much, the powder characteristics of MBS resins are markedly deteriorated. For example, since the granulation property is lowered, a massive resin is only obtained when powdering the resin from a latex and, therefore, it is difficult to make the product by a plant. Also, there arises a so- called blocking problem that since blocking occurs during storage or transfer of the powdery product, it is difficult to take out the MBS resin from silo, container or bag, or since bridging occurs in the vicinity of a discharge port when discharging from a hopper, spontaneous discharge is not possible.

Improvement in such powder characteristics of MBS resins is also strongly demanded in recent years, and the powder characteristics are now one of important characteristics of MBS resins. Various proposals for improving the powder characteristics have hitherto been reported. For example, Japanese Patent Publication Kokai No. 57-59929 discloses a method for improving the blocking resistance by coagulating a latex of a graft copolymer in a gas phase. Japanese Patent Publication Kokai No. 7-3106 discloses a method for improving the blocking resistance by adding a specific polymer to MBS resins. However, in case of MBS resins having a high Bd content, these methods still cannot achieve the powder characteristics demanded.

As mentioned above, it is essential for imparting a higher impact resistance to conventional thermoplastic resins to use a larger amount of Bd. Also, in instances where thermoplastic resins are used for the purposes which require a transparency, it is also necessary for maintain the transparency to fairly strictly match the refraction index of MBS resin with that of a vinyl chloride resin; and, therefore, the composition of components constituting the MBS resin is restricted. Like this, due to the contradictory factors and restriction in constituting components, it is very difficult to improve the powder characteristics of MBS resins having a high Bd content to be incorporated into vinyl chloride resins intended to use for purposes which require a transparency.

European Application 1,086,989 attempted to address this need. That application discloses a synthetic resin powder which is prepared by coagulating a specific MBS resin latex. Notwithstanding the above, the European Application does not disclose or suggest ways of further improving the physical and processing characteristics of polymeric resins used as impact modifiers. The plastic manufacturing industry would greatly welcome the identification of an impact modifier composition that provides superior impact resistance and/or excellent transparency properties.

Accordingly, one object of the present invention provides polymeric compositions comprising MBS resins a high Bd content and improved powder characteristics.

A further object of the present invention provide polymeric compositions comprising MBS resins that can be used as an impact modifier for thermoplastic resins, wherein the MBS resins have an improved granulation property and improved blocking resistance and impart a high impact resistance to the thermoplastic resins into which they are incorporated.

Another object of the present invention provides a thermoplastic resin composition having excellent transparency and impact resistance which comprises a thermoplastic resin and at least one of the polymeric compositions described above.

These and other objects will be apparent to those skilled in the art after reading the specification and appended claims.

The novel polymeric compositions of the present invention comprise at least one MBS resin which comprises graph copolymer particles having a rubber-containing core portion at least partially grafted to a shell portion. The graph copolymer particles are in the form of a powder having improved granulation properties and blocking resistance. In accordance with this invention, the graph copolymer particles are prepared by:

1. coagulating an MBS resin having the following compositional relationships:

a) $-1.5\mathbf{x} + 140 \leq \mathbf{y} \leq -1.65\mathbf{x} + 180$ , and

b) $55 \leq \mathbf{x} \leq 70$

where **x** is the butadiene content (wt. %) of the MBS resin; and **y** is the Vicat softening point (°C) of the MBS resin;

2. adding to the coagulated MBS resin a hard polymer in an amount of 0.1 to 10 parts by weight per 100 parts by weight of the coagulated MBS resin; and

3. recovering a powder from the mixture of the coagulated MBS resin and the hard polymer.

In one specific embodiment, the minimum concentration of Bd in the MBS resin is greater than 30 weight percent. Also, the maximum concentration of Bd in the MBS resin is less than 70 weight percent. These weight percentages are based on the total weight of the graph copolymer particle. In this specific embodiment, at least one of the following must exist:

1. At least a portion of the graft copolymer particles has a void-containing rubber portion.

2. The polymeric composition further includes at least 1 weight percent of a processing oil component.

3. The polymeric composition further includes at least 2 weight percent of a processing aid component.

4. The polymeric composition contains at least two different populations of polymeric particles, wherein each has a rubber-containing portion, and wherein the difference is in at least one of the following: the void concentration in the rubber-containing portions of each population, the chemical composition of each population, the average particle size of each population, or the shape of each population.

In another specific embodiment, the minimum concentration of Bd in the MBS resin is greater than 70 weight percent. Also, the maximum concentration of Bd in the MBS resin is less than 100 weight percent. These weight percentages are based on the total weight of the MBS graph copolymer particle. In this embodiment, any one or more of features 1. through 4. set out above could also, optionally, be present.

The novel thermoplastic resin systems of the present invention include a plastic resin component and an impact modifier component comprising at least one of the novel polymeric compositions set out above.

The term "units derived from" used herein refers to polymer molecules that are synthesized according to known polymerization techniques wherein a polymer contains "units derived from" its constituent monomers.

The term "molecular weight" used herein refers to the weight average molecular weight of polymer molecules as determined by the gel permeation chromatography method.

The term "alkyl (meth)acrylate" used herein refers to both alkyl acrylate and alkyl methacrylate monomer compounds.

The term "stage" used herein is intended to encompass its broadest possible meaning, including the meaning conveyed in prior art such as in U.S. Patent 3,793,402 which offers various means for achieving "staged" polymers.

The term "parts" used herein is intended to mean "parts by weight". Unless otherwise stated, "total parts by weight" do not necessarily add to 100.

The term "weight percent" used herein is intended to mean "parts per hundred by weight" wherein the total parts add to 100.

The term "particle size" used herein refers to the mean particle diameter of a population of particles.

As stated above, in one embodiment, the content "**x**" of the Bd (weight percentage of Bd monomer units) in MBS resins is greater than 30 weight percent, or greater than 40 weight percent, or greater than 50 weight percent. Also, the maximum concentration of Bd in the MBS resin is less than 70 weight percent, or less than 65 weight percent, or less than 60 weight percent. These weight percentages are based on the total weight of the graph copolymer particle. In a further specific embodiment, the content "**x**" of the Bd in MBS resins ranges from 55 to 70 % by weight, or from 60 to 68 % by weight. Under certain conditions, MBS resins made in accordance with the present invention having a Bd content of 60 to 68 % by weight are preferable since they not only provide vinyl chloride resins with a sufficient impact strength; but also, a powder having good powder characteristics. In the embodiment wherein the content "**x**" of the Bd in MBS ranges between 30 to 70 weight percent, at least one of the following must be present:

1. At least a portion of the graft copolymer particles has a void-containing rubber portion.

2. The polymeric composition further includes at least one of the following:

a. 1 weight percent of a processing oil component,

b. at least 2 weight percent of a processing aid component, or

c. at least two different populations of polymeric particles, wherein each has a rubber-containing portion, and wherein the difference is in at least one of the following: the void concentration in the rubber-containing portions of each population, the chemical composition of each population, the average particle size of each population, or the shape of each population.

Each of these will now be discussed in detail.

**Presence Of A Void-Containing Rubber Portion**

The polymeric composition includes at least one population of polymeric particles which have a void-containing rubber portion in which the volumetric proportion of the voids defined within the rubber portion ranges from 1 to 90%.

The void-containing rubber particles can be prepared by applying techniques used in the field of paints. For example, there are (a) methods of preparing a W/O/W emulsion and polymerizing a monomer of the O layer (O: hydrophobic, W: hydrophilic); (b) methods of hollowing by swelling core-shell particles having a swellable core at a temperature of not less than Tg of the shell layer; (c) methods of two stage polymerization of polymers having different solubility parameters; (d) methods of finely dispersing a polymerizable monomer mixture containing a crosslinkable monomer and hydrophilic monomer and an oily substance in water to give a O/W emulsion and then polymerizing for crosslinking and removing the oily substance after the crosslinking; and (e) methods of using a phenomenon, in which a carboxylic acid unit copolymerized in the particle moves in the particle under acidic or alkaline conditions as set out in "*Application of Synthetic Latex*" by Takaaki Sugimura, *et al*, pp. 285, published by Kobunshi Kankokai (1993).

In this specific embodiment, the void-containing rubber particles can be prepared by any of the method known to those skilled in the art, including the methods set out in the prior paragraph. However, for illustrative purposes, one method of practicing process (b) is described below.

First, rubber polymer particles or hard polymer particles are used as a core. To an aqueous dispersion or latex of these polymer particles are added a monomer mixture for a rubber polymer forming a shell and an oily substance for swelling the polymer particles of the core. Thus, the polymer particles of the core are swelled by the oily substance. At the time when the polymer particles are swelled enough, the monomer mixture is polymerized to form the shell comprising the rubber polymer. Then, by removing the oily substance swelling the core, the core is shrunk and a cavity arises between the shell of rubber polymer and the polymer particle of the core. Thus, the void-containing rubber particles can be obtained.

The void-containing rubber particles have at least one cavity (hollow part) defined therein. The number of the cavities is not limited to one. The shape of the cavity or cavities is also not limited; and, the cavity or cavities may be in the form of sphere, flat sphere, pore or honeycomb. Also, on the inner surface of the cavity or cavities, there may exist concave or convex or protrusions.

The volumetric proportion (cavity ratio) of the cavity to the rubber particle typically ranges from 1 to 90%. It is within the scope of this invention for cavity ratio to range from 5 to 80%; or from 10 to 70%, or from 15 to 60%. The preferred cavity ratio depends, in part, on the desired properties of the resulting polymeric composition. After reading this specification, those skilled in the art will be able to determine the cavity ratio which meets their needs.

The average particle size of the void-containing rubber particles typically ranges from 50 to 2,000 nm. It is within the scope of this invention for these void-containing rubber particles to have an average particle size ranging from 75 to 1,750 nm; or from 100 to 1,500 nm, or from 200 to 1,000 nm. The preferred average particle size of the void-containing rubber particles depends, in part, on the desired properties of the resulting polymeric composition. After reading this specification, those skilled in the art will be able to determine the average particle size which best suits their needs.

The rubber component of these void-containing rubber particles typically has a glass transition temperature ("Tg") of not greater than 20°C. It is, however, within the scope of this invention for the Tg of this rubber component to be less than 0°C; or less than -20°C, or less than -40°C. The preferred Tg of the rubber component depends, in part, on the desired properties of the resulting polymeric composition. After reading this specification, those skilled in the art will be able to determine Tg which best suits their needs.

In this embodiment, a crosslinking agent can, optionally be present in the void-containing rubber portion of

the polymeric particles. If present, the concentration of the crosslinking agent typically ranges from 0.01 to 5 weight percent. It is within the scope of this invention for the concentration of the crosslinking agent to range from 0.05 to 4 weight percent; or from 0.1 to 3 weight percent; or from 0.15 to 2 weight percent; or from 0.2 to 1 weight percent. The above weight percentages are based on the total weight of the void-containing rubber portion.

Examples of crosslinking agents that can be used when practicing this invention include: allyl methacrylate, divinylbenzene, diallyl phthalate, polyethylene glycol dimethacrylate, 1,3-butylene glycol dimethacrylate, and ethylene glycol dimethacrylate. These may be used solely or in a combination use of two or more thereof.

## Presence of a Processing Oil Component

The polymeric composition further includes at least 1 weight percent of a processing oil component. In this embodiment, the percentage of the weight of the processing oil component to the weight of the total population of polymeric particles typically ranges from 1 to 30 weight percent; or from 2 to 25 weight percent; or from 3 to 20 weight percent.

Moreover, the ratio of the weight of the processing oil component to the weight of the polymeric composition typically ranges from 0.1:10 to 5.0:10. It is within the scope of this embodiment of the invention for this weight ratio to range from 0.5:10 to 4.5:10; or from 1.0:10 to 4.0:10; or from 1.5:10 to 3.5:10. The actual ratio used will depend upon the relative solubility of the processing oil component in the particular plastic resin and the polymeric composition. However, when the ratio is too large, problems of over lubrication can be encountered.

The term "processing oil" as it relates to the term "processing oil component" includes: (a) polymers which have a weight average molecular weight (Mw) of less than 5,000 g/mol; (b) alkylacrylates having an alkyl group containing 12 or more carbon atoms; (c) esters containing carboxylic acids or alcohols with 12 or more carbon atoms; (d) vegetable oils; (e) marine oils; (f) industrial oils; (g) palm oils; (h) animal fats; and (i) mineral oils. Examples of (a) include: polybutene, polydimethylsiloxane, polypropylene, polybutadiene, and polyisoprene. Examples of (b) include: stearyl (meth)acrylate, and lauryl (meth)acrylate. Examples of (c) include: methyl stearate, ethyl stearate, butyl stearate, and stearyl citrate. Examples of (d) include: sunflower oil, peanut oil and olive oil. An example of (e) includes: cod liver oil. Examples of (f) include: castor oil and linseed oil. An example of (g) includes: coconut oil. An example of (h) includes: tallow. Examples of (i) include: paraffinic oils with saturated straight or branched chains or rings containing at least 20 carbon atoms; naphthenic or relatively naphthenic, that is, containing saturated monocyclic (from 4 to 12 carbon atoms) or polycyclic (from 13 to 26 carbon atoms) hydrocarbon oils; microcrystalline wax, paraffin wax and low molecular weight polyolefins such as polyethylene wax, either in liquid, powder or flake form; aromatic oils with a minimum molecular weight of 300 g/mol; and white mineral oils which are a complex mixture of saturated paraffinic and naphthenic hydrocarbons and are free of aromatic compounds, sulphur containing compounds, acids and other impurities.

Under certain preferred circumstances, the processing oil component comprises mineral oils. If employed, the preferred mineral oils are typically those which are easy to handle and do not present environmental or health concerns. Such include those which have a low viscosity and those with a low volatility at the temperatures used during the milling and extrusion blending processes. Examples of specific mineral oils which have these properties include heavy mineral oils such as those termed USP mineral oils (they typically have a density ranging of from 0.86 - 0.90 g/ml), and light mineral oils (they typically have a density ranging of from 0.80-0.85g/ml). One preferred heavy mineral has a density of 0.86 g/ml; and one preferred light mineral oil has a density of 0.84 g/ml, both of these oils are available from the Aldrich Chemical Company.

When practicing this specific embodiment, it is contemplated that the processing oil component can be mixed with at least a portion of the population of polymeric particles by at least one of the following methods: (a) combining the processing oil directly or indirectly with the polymeric particles after the polymeric particles have been formed, or (b) adding the processing oil at the start of, or at some point during, the reaction process used to prepare the polymeric particles.

One example of a preferred process for combining at least one processing oil with the polymeric particles includes the following steps: (a) mixing together an aqueous surfactant solution, a first monomer material and an initiator; (b) heating the resulting mixture to polymerize the monomers; optionally (c) combining the resulting polymerized product from step (b) with a second monomer, a further initiator and further surfactant and heating the resulting mixture to produce a core/shell latex; and (d) isolating the resultant core/shell polymeric particles; wherein the processing oil is added to the reaction mixture during any one or more of the steps (a), (b), (c) or (d). It also within the scope of this embodiment for either at least a portion of the processing oil to be added after step (d), or for all of the processing oil to be added after step (d).

## Presence of a Processing Aid Component

The polymeric composition further includes at least 1 weight percent of a processing aid component. In this

embodiment, the percentage of the weight of the processing aid component to the weight of the total population of polymeric particles typically ranges from 1 to 30 weight percent; or from 2 to 25 weight percent; or from 3 to 20 weight percent.

In accordance with this embodiment, the processing aid component comprises at least one population of processing aid particles. The population of processing aid particles can include single-stage particles, two-stage particles, or multi-stage polymer particles, as well as core/shell polymer particles.

When practicing this embodiment, the processing aid particles are typically comprised of polymerized units derived from one or more ethylenically unsaturated monomers. Typically, such monomers include at least one of the following: vinyl aromatics, butadiene, alkyl (meth)acrylates, and (meth)acrylonitriles.

As used in this embodiment, the terms "alkyl (meth)acrylate" refers to a $C_2$ to $C_{12}$ alkyl (meth)acrylate. It is also within the scope of this invention for the term alkyl (meth)acrylate to refer to a $C_2$ to $C_{10}$ alkyl (meth)acrylate, or a $C_2$ to $C_8$ alkyl (meth)acrylate.

In certain preferred embodiments, the processing aid particles contain at least 50 weight methyl methacrylate copolymerized with up to 50 parts by weight of at least one of the following: alkyl (meth)acrylates, styrene, and (meth) acrylonitrile. It is within the scope of this embodiment of the invention for the processing aid particles to contain at least 75 weight methyl methacrylate copolymerized with up to 25 parts by weight of at least one of the following: alkyl (meth) acrylates, styrene, and (meth)acrylonitrile.

In this embodiment, the processing aid particles can include "hard" polymeric particles having a Tg of at least 25°C; or at least 35°C; or at least 45°C, or at least 55°C. It is, however, within the scope of this invention for the processing aid particles to include "soft" polymeric particles having a Tg of at most 20°C; or at most 0°C; or at most -20°C; or at most -40°C.

The molecular weight of the processing aid particles is typically greater than 100,000 g/mol. Generally, the molecular weight of the processing aid particles is greater than 1,000,000 g/mol. If the processing aid particles used in this embodiment include "soft" polymeric particles as defined above, then, additional advantageous results can be observed when their molecular weight is at least 2,000,000 g/mol.; or at least 3,000,000 g/mol., or at least 4,000,000 g/mol., or at least 5,000,000 g/mol.

The upper limit of the molecular weight for the hard or soft polymeric particles of the processing aid is determined, in part, by the processing conditions to which they are exposed, as well as their desired end use. Typically, their molecular weight is less than 12,000,000 g/mol., or less than 10,000,000 g/mol, or less than 8,000,000 g/mol.

Hard polymeric processing aid particles may be formed from homo- or copolymers of monomers such as styrene, methyl methacrylate, butyl acrylate, and ethyl acrylate, especially when the particle is prepared as a single-stage polymer particle. Although it is preferred that the processing aid particles contain no crosslinker, the polymers may contain one or more units derived from multifunctional monomers containing two or more double bonds, such as from about 0.1 to about 5% of at least one of ALMA, allyl acrylate, DALMA, diallyl fumarate, divinylbenzene, a di- or triacrylate ester of a polyol, or a di- or trimethacrylate ester of a polyol.

Soft polymeric processing aid particles may comprise at least a first polymeric stage, wherein at least 50 weight percent of the first polymeric stage comprises a first polymeric component having units derived from one or more of the following: butadiene, and alkyl (meth)acrylates. Thus, the polymeric compositions which have a first polymeric stage comprising copolymers of butadiene and an alkyl (meth)acrylate(s), in any ratio, are encompassed by this invention.

The preferred first polymeric stage of such soft polymeric processing aid particles depends, in part, on the processing conditions to which the processing aid particles are exposed, as well as their desired end use. In one preferred embodiment, at least 50 weight percent of the first polymeric stage comprises a first polymeric component having units derived from one or more alkyl (meth)acrylate, or at least 60 weight percent of one or more alkyl (meth) acrylate, or at least 70 weight percent of one or more alkyl (meth)acrylate, or at least 80 weight percent of one or more alkyl (meth)acrylate.

The upper weight percent limit of the first polymeric component of soft polymeric processing aid particles also depends, in part, on the processing conditions to which the polymeric compositions are exposed, as well as their desired end use. In one preferred embodiment, 100 weight percent of the first polymeric stage comprises a first polymeric component having units derived from one or more alkyl (meth)acrylate, or at most 95 weight percent of one or more alkyl (meth)acrylate, or at most 90 weight percent of one or more alkyl (meth)acrylate, or at most 85 weight percent of one or more alkyl (meth)acrylate.

In the above illustrative examples wherein the first polymeric stage of the soft polymeric processing aid particles comprises a first polymeric component having units derived from one or more alkyl (meth)acrylate, in one preferred embodiment, the first polymeric component has units derived from at least one of the following: ethyl acrylate, butyl acrylate, hexyl acrylate, octyl acrylate, or 2-ethylhexyl acrylate. In another preferred embodiment, the first polymeric component of the soft processing aid particles has units derived from at least one of the following: ethyl acrylate, butyl acrylate, or 2-ethylhexyl acrylate. In still another preferred embodiment, the first polymeric component of the soft

processing aid particles has units derived from ethyl acrylate.

In instances where the first polymeric component is less than 100 weight percent of the first polymeric stage, the remaining weight percentage can be made up of at least a second polymeric component. It is within the scope of this embodiment of the invention for there to be a plurality of subsequent polymeric components.

If present, the preferred amount of the second polymeric component depends, in part, on the processing conditions to which the polymeric compositions of the present invention are exposed, as well as their desired end use. In one preferred embodiment, at least 5 weight percent of the first polymeric stage comprises a second polymeric component, or at least 10 weight percent of the first polymeric stage comprises a second polymeric component, or at least 15 weight percent of the first polymeric stage comprises a second polymeric component.

The upper weight percent limit of the second polymeric component present also depends, in part, on the processing conditions to which the polymeric compositions of the present invention are exposed, as well as their desired end use. In one preferred embodiment, 50 weight percent of the first polymeric stage comprises a second polymeric component, or at most 40 weight percent of the first polymeric stage comprises a second polymeric component, or at most 30 weight percent of the first polymeric stage comprises a second polymeric component.

If present, the second polymeric component can be any suitable polymeric compound that yields a Tg of 20°C or less for the final polymeric composition. Examples of such suitable polymeric compounds include: other $C_1$ to $C_{18}$ alkyl (meth)acrylates , isoprene, vinyl acetate, , styrene, alpha methyl styrene , acidic monomers such as acrylic acid or isobutylene, (meth)acrylonitrile, *etc.*

The preferred second polymeric component depends, in part, by the processing conditions to which the polymeric compositions of the present invention are exposed, as well as their desired end use. If used as a plastic additive, in one preferred embodiment, the second polymeric component comprises at least one of the following: $C_1$ to $C_{18}$ alkyl (meth)acrylates, alpha methyl styrene, styrene, acidic monomers such as (meth)acrylic acid. In another preferred embodiment, the second polymeric component comprises at least one of the following: $C_1$ to $C_{18}$ alkyl (meth)acrylates.

The first polymeric stage can also contain units derived from at least one multi-unsaturated monomer. If present, the concentration of such units ranges from 0.01 weight percent to 5 weight percent of the total weight of the core portion. The multi-unsaturated monomer may be one in which the unsaturated groups are similar and of equal reactivity, such as in divinyl benzene, divinyl adipate, ethylene glycol dimethacrylate, butylene glycol diacrylate, trimethylolpropane trimethacrylate, and the like. On the other hand, the multi-unsaturated monomer may be one in which the unsaturated groups are dissimilar and of unequal reactivity, such as in diallyl maleate, allyl methacrylate, allyl acrylate, and the like.

The processing aid particles used when practicing this embodiment can be prepared by any means known to those skilled in the art. One example of a known process is emulsion polymerization (*e.g.*, US Patent 3,833,686). This process can provide populations of processing aid particles having a mean particle size ranging from 10 to 1,000 nm. It is within the scope of this invention for the populations of processing aid particles to have a mean particle size ranging from 20 to 800 nm; or from 30 to 600 nm; or from 40 to 400 nm.

## <u>Presence of At Least Two Different Populations Of Rubber-Containing Polymeric Particles</u>

The polymeric composition contains at least two different populations of polymeric particles, wherein each has a rubber-containing portion, and wherein the differences are at least one of the following: the void ratio of their rubber containing portions, their chemical compositions, the average sizes of their particles, or the shapes of their particles.

If the difference between the populations is their average particle sizes, there will be a population having a "large" particle size, and a population having a "small" particle size. The average particle size of the large particles is at least 20 percent larger than the average particle size of the small particles. It is within the scope of this embodiment for the average particle size of the large particles to be at least 30 percent larger; or at least 40 percent larger; or at least 50 percent larger than the average particle size of the small particles.

In this embodiment, the large particles typically have a mean particle diameter which ranges from 50 to 7,000 nm. It is within the scope of this invention for the large particles to have a mean particle diameter which ranges from 100 to 5,000 nm; or from 200 to 3,000 nm; or from 300 to 1,000 nm.

On the other hand, the small particles typically has a mean particle diameter which ranges from 10 to 1,000 nm. It is within the scope of this invention for the small particles to have a mean particle diameter which ranges from 30 to 800 nm; or from 50 to 600 nm; or from 100 to 400 nm.

If the difference between the populations of particles is shape, this can include populations of particles having different morphologies such as: ellipsoidal particles having an aspect ratio greater than 1:1; raspberry-shaped particles; multi-lobe-shaped particles; dumbbell-shaped particles; agglomerated particles; round particles, cylindrical particles, abstract-shaped particles, bi-lobal particles, or circular particles.

If the difference between the populations of particles is the void ratio of their respective rubber-containing

portions, the volumetric proportion of the voids defined within one of the populations is at least 20 percent greater than the volumetric proportion of voids defined within the other population of polymeric particles. It is within the scope of this invention for the volumetric proportion of the voids defined within one of the populations is at least 30 percent greater, or at least 40 percent greater, or at least 50 percent greater than the volumetric proportion of voids defined within the other population of polymeric particles.

Also as stated above, in another embodiment, the content "**x**" of the Bd in MBS resins is greater than 70 weight percent, or greater than 75 weight percent, or greater than 80 weight percent. Also, the maximum concentration of rubber in the core portion of the MBS resin in this embodiment is less than 100 weight percent, or less than 95 weight percent, or less than 90 weight percent. These weight percentages are based on the total weight of the MBS graph copolymer particle.

In this embodiment, the existence the additional features identified above as "Presence Of A Void-Containing Rubber Portion", "Presence of a Processing Oil Component", "Presence of a Processing Aid Component", and "Presence of at Least Two Different Populations of Rubber-Containing Polymeric Particles" do not need to exist. It is, however, within the scope of this invention for these feature to be present in this embodiment.

The polymeric composition of the present invention comprising MBS resins can be prepared by any conventional means know to those skilled in the art. An example of a method that can be used includes graft-polymerizing a monomer component comprising an alkyl methacrylate, preferably methyl methacrylate, an aromatic vinyl compound such as styrene and, optionally, other vinyl monomers copolymerizable therewith such as methyl acrylate, ethyl acrylate, butyl acrylate and acrylonitrile onto a crosslinked or non-crosslinked butadiene-based rubber such as polybutadiene (PBd), styrene-butadiene rubber (SBR) or acrylonitrile-butadiene rubber (NBR).

The blocking resistance which is a measure of the powder characteristics has a close relationship to the Vicat softening point (°C) of MBS resin. The Vicat softening point is measured under a load of 1 kg according to JIS K 7206. In general, the higher the softening point, the better the granulation property and the blocking resistance. The range of the Vicat softening point "**y**" of MBS resin used in the present invention is represented by the following equation:

$$- 1.5x + 140 \leq y \leq -1.65x + 180 ,$$

preferably

$$- 1.2x + 128 \leq y \leq -1.65x + 180 ,$$

wherein **x** is the Bd content (% by weight) of MBS resin.

If the Vicat softening point (y) is less than "-1.5x + 140", the granulation property is diminished since the softening point becomes low with respect to the Bd content. From the viewpoint of better granulation property, it is preferable that the Vicat softening point is not less than "-1.2x + 128". If the Vicat softening point is more than "-1.65 + 180", the impact resistance-improving effect of MBS resin is lowered.

In general, the Vicat softening point is mainly determined by the kinds and amounts of monomers which constitute MBS resin and is closely related with the glass transition temperatures of the respective components, although it is also affected by the molecular arrangement of the monomers and the intramolecular or intermolecular structure of the monomers. For example, among methyl methacrylate, butadiene and styrene which can be used as the components of MBS resin, if butadiene which is low in glass transition temperature is used in a large amount, the Vicat softening point is lowered, and if methyl methacrylate or styrene which are relatively high in glass transition temperature is used in a large amount, the Vicat softening point is raised. Also, even in the case of MBS resins which are composed of the same kinds and same amounts of monomers, the Vicat softening points differ if the rubbers used therein are for example a polybutadiene and a styrene-butadiene copolymer rubber. Further, MBS resins having a high degree of intramolecular or intermolecular crosslinking tend to have a high Vicat softening point. The Vicat softening point of the obtained MBS resin can be adjusted by selecting and adjusting the kinds and amounts of the monomers used.

In certain specific embodiments, the MBS resin of the present invention having an improved powder characteristics is required to have a refraction index matched with the refraction index of a vinyl chloride resin to be incorporated therewith so that the transparency of the vinyl chloride resin is maintained. In these circumstances, the difference in refraction index between the modified MBS resin and a vinyl chloride resin is preferably at most 0.02, and is more preferably at most 0.01 from the viewpoint that a higher transparency is obtained. If the difference in refraction index is more than 0.02, the transparency of molded articles composed of vinyl chloride resin and modified MBS resin is markedly lowered. The difference in refraction index between the modified MBS resin and a vinyl chloride resin may be selected in accordance with the level of transparency required. In case that a high transparency is required, it is

necessary to make the refraction index difference small, and in case of uses which do not require a transparency much, a relatively large difference in refraction index is sufficient.

Refraction index values described in various literatures such as Polymer Handbook (John Willy & Sons. Inc., 1989) can be adopted in the present invention. The refraction index of a copolymer can be obtained by the total of the products of the refraction index of each of monomers and the weight fraction thereof. The refraction index of a mixture can be obtained by the total of the products of the refraction index of each of the components and the volume fraction thereof.

The method of the polymerization for MBS resins is not particularly limited, but an emulsion polymerization method is desirable from the viewpoints of control in particle size and removal of heat generated in polymerization.

As the rubber component of the MBS resins are used polybutadiene rubber and butadiene copolymer rubbers such as SBR and NBR prepared from Bd and other monomers copolymerizable with Bd. The copolymerizable other monomers are not particularly limited. Examples of the copolymerizable other monomers include: an alkyl acrylate having a $C_1$to $C_5$alkyl group such as butyl acrylate, an aromatic vinyl compound such as styrene, a vinyl cyanide compound such as acrylonitrile, and other vinyl monomers. These may be used alone or in combination thereof.

In certain embodiments, it is preferable that the content of the other monomers copolymerizable with Bd in the butadiene copolymer rubbers is not more than 30 % by weight. Crosslinking agents and chain transfer agents which have been conventionally used in the polymerization for the rubber component, can also be used. Representative examples of thee crosslinking agent are compounds having at least two polymerizable groups in the molecule, such as divinyl benzene, 1,3-butylene glycol dimethacrylate, allyl methacrylate and diallyl phthalate. These crosslinking agents may be used alone or in combination thereof. Representative examples of the chain transfer agent include: n-dodecylmercaptan, and t-dedecylmercaptan.

As the monomers used in the polymerization for the graft portion of the MBS resin, there can be used those used in the preparation of known MBS resins. Known MBS resins have been generally prepared by graft-polymerizing a monomer component comprising an alkyl methacrylate, an aromatic vinyl compound and optionally other vinyl compounds copolymerizable therewith onto a butadiene-based rubber. Examples of the alkyl methacrylate include an alkyl methacrylate having a $C_1$to $C_{12}$ alkyl group such as methyl methacrylate, ethyl methacrylate, propyl methacrylate or butyl methacrylate, and mixtures thereof. Preferable are methyl methacryalte and a mixture of alkyl methacryaltes containing a major amount of methyl methacrylate. Examples of the aromatic vinyl compound include styrene, a styrene derivative such as $\alpha$-methylstyrene or chlorostyrene, and a mixture thereof. Styrene is preferably used.

Examples of the optionally used other vinyl compounds include: an alkyl acrylate having a $C_1$to $C_{12}$ alkyl group such as methyl acrylate, ethyl acrylate or butyl acrylate, a vinyl cyanide compound such as acrylonitrile or methacrylonitrile, and the like. These may be used alone or in combination thereof. It is preferable that the monomers used in the graft polymerization are selected so as not to impair the transparency of vinyl chloride resins.

When adding the monomer component to the polymerization, respective monomers may be separately added to the polymerization system all at once or continuously. Also, a mixture of the monomers may be added all at once or continuously. Further, necessary amounts of a crosslinking agent and a chain transfer agent as mentioned above can be used.

Also, upon conducting the above-mentioned polymerization by means of an emulsion polymerization method, emulsifying and dispersing agents conventionally used for stabilization of emulsification in the emulsion polymerization and polymerization initiators conventionally used can be used. Examples of the emulsifying and dispersing agents include anionic surface agents, non-ionic surface agents, polyvinyl alcohol and the like. Examples of the polymerization initiators include peroxide radical polymerization initiators such as azobisisobutyronitrile, azobisvaleronitrile, benzoyl peroxide, lauryl peroxide, t-butyl hydroperoxide, cumene hydroperoxide and potassium persulfate, and the like.

The same initiator may be used throughout the polymerization, or different initiators may be used in respective stages of polymerization. If necessary, suitable oxidizing and reducing agents may be used as a redox polymerization initiator. Also, in case of adopting different polymerization methods, additives required in each polymerization method may be used, such as emulsifier, dispersant, stabilizer, pH adjusting agent and the like.

Method for recovering a resin powder from the thus obtained MBS resin is not particularly limited. For example, a powder can be obtained by adding a necessary amount of a salt such as calcium chloride, magnesium chloride or magnesium sulfate or an acid such as hydrochloric acid or phosphoric acid to a polymer latex to coagulate the latex, and elevating the temperature to 60 to 100°C with stirring to heat-treat the resulting slurry, followed by dehydration and drying. At that time, various stabilizers such as phenol type, sulfur type or hindered amine type stabilizers can be used.

Another method for recovering a resin powder from the thus obtained MBS resin includes the steps of:

(a) forming an emulsion having a solid component comprising a population of particles, a liquid component, and a first ionic forming compound, wherein the presence of the first ionic forming compound in the emulsion does not result in the coagulation of the population of particles contained therein;

(b) obtaining a composition comprising a second ionic forming compound which, by itself, is not sufficient to result in the coagulation of the population of particles contained in the emulsion; and

(c) mixing the emulsion and the composition comprising the second ionic compound such that the first ionic forming compound reacts with the second ionic forming compound to form a coagulating agent which results in the coagulation of the population of particles.

In the above embodiment, the composition comprising the second ionic forming compound ion can be an emulsion having a solid component comprising a second population of particles, a liquid component, and the second ionic forming compound. In this embodiment, the presence of the second ionic forming compound does not result in the coagulation of the population of particles contained therein.

When practicing the embodiments wherein a coagulating agent is made *in situ*, a first and a second emulsion are formed, each having a solid component comprising at least one population of particles, a liquid component comprising water, and an ionic forming compound that may be present in the emulsion's solid component, liquid component, or both. The composition and strength of the ionic forming compounds present in the individual emulsions are such that they: (a) do not result in the coagulation of the population(s) of particles contained within any given emulsion, but (b) do react with each other to form a coagulating agent which results in the coagulation of the population(s) of the particles contained within the first and second emulsions when the two emulsions are blended together. After reading this specification, those skilled in the art will be able to select the appropriate composition, concentration and strength of the first and second ionic forming compounds which best suits their specific needs. In many instances, the composition of ionic forming compounds which can be used when practicing this invention include: acids, bases, water miscible solvents, and salt solutions.

The coagulation of the particles in accordance with these embodiments result from the *in situ* formation of a coagulating agent. For example, where the emulsifier is a sulfate and sulfonate, this can be accomplished by the coagulating agent being a salt, such as sodium chloride, and calcium chloride. However, if the emulsion is stabilized with a soap having carboxylic acid groups, this can be accomplished by the coagulating agent being an appropriate acid.

In one specific embodiment, the first emulsion contains an acid (*i.e.,* the first ionic forming composition) and the second emulsion contains a base (*i.e.*, the second ionic forming composition). Then, when the emulsions are blended together, a salt (*i.e.*, the coagulating agent) is formed *in situ*. The acid and base may be present in their respective emulsions as concentrated solutions of the same. If an acid and base are used as the first and second ionic forming composition, it is typically preferred that they be water soluble. It is also typically preferred that resulting salt be water soluble.

In another specific embodiment, an emulsion contains an acid (*i.e.*, the first ionic forming composition) and the composition comprising the second ionic forming compound contains a base. Then, when the emulsion is blended with the composition comprising the second ionic forming compound, a salt (*i.e.*, the coagulating agent) is formed *in situ*. The acid and base may be present in as concentrated solutions of the same. If an acid and base are used as the first and second ionic forming composition, it is typically preferred that they be water soluble. It is also typically preferred that resulting salt be water soluble.

Suitable bases that can be used when practicing this invention include: ammonia, low molecular weight amines such as monomethyl amine. The preferred base depends upon the specific composition of the emulsions, and the process, handling and storage conditions to which they are subjected. In instances where the emulsion comprises a high solids impact modifier, ammonia is one example of a preferred base.

A combination coagulant system comprised of ammonia and acetic acid is particularly desirable in some cases, because the resulting ammonium acetate salt will decompose and become volatile at elevated temperatures. It is possible to conceive of a number of ways in which this phenomenon can be exploited to cause evaporation of the components of the combined coagulant salt. One possible approach would be to provide an extruder with a devolatilization zone in which heat is applied to evaporate residual water, ammonia and acetic acid, thus leaving a final solid polymer which is effectively salt-free.

Suitable acids that can be used when practicing these embodiments include: carbon dioxide, sulfur dioxide, acetic acid, formic acid, and propionic acid. The preferred acid depends upon the specific composition of the emulsions, and the process, handling and storage conditions to which they are subjected. In instances where the emulsion comprises a high solids impact modifier, acetic acid is one example of a preferred acid.

The proper selection of the individual ionic forming compounds depends, in part, upon the method of coagulation. Often times, the method of coagulation will depend upon the type of surfactant present in the separate emulsions. Surfactants may be chosen from a variety known to the emulsion art, such as alkali metal or ammonium salts of long-chain alkylsulfonic acids, long-chain alkylsulfates, derivatives of aromatic sulfonates, and ethoxylated alkaryl phosphates. Specific examples of surfactants that can be used to make emulsions employed when practicing this invention include: sodium lauryl sulfate, sodium dodecylbenzene sulfonate, potassium dodecylbenzene sulfonate, lauryl(ethoxy)sulfates and sulfonates, lauryl(polyethoxy)sulfates and sulfonates, alkaryl(polyethoxy)sulfates and sulfonates, cetyltrimethylammonium chloride, and TRITON™ X 100 having the structure:

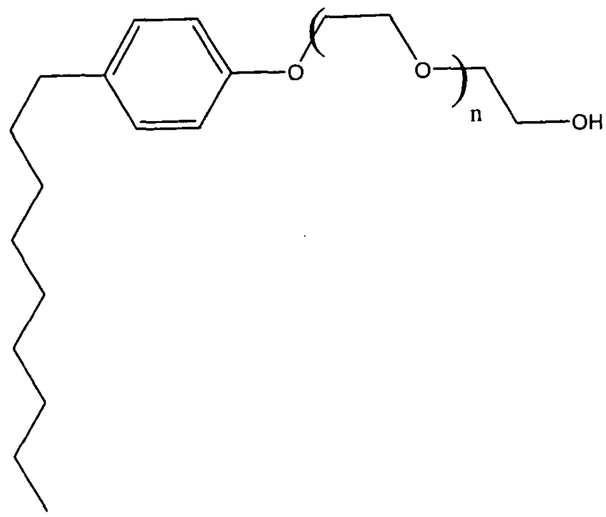

Anionic surfactants are often preferred. In those instances, the adsorbed anion produces a negatively charged surface surrounded by an electrical double layer. The mechanism of salt coagulation is compression of the electrical double layer on the particle surface by the coagulant's ions. The effectiveness of the salt is especially determined by the type and charge of the cation. Cation efficiencies for compressing double layers, and their respective threshold salt concentrations, are as follows:

$$Al^{3+} >> Ca^{2+} \sim Mg^{2+} >> Na^{1+} \sim K^{1+} \sim NH_4^{+}$$

$< 0.1$ wt.% 0.1 to 1 wt.% 3 to 5 wt.%

Preferred examples of coagulating agents that are formed *in situ* when practicing this invention include: NaCl, ammonium salts, $MgSO_4$, and $CaCl_2$.

Depending upon the solids concentrations of the individual emulsions, the liquid content of the coagulated mass will vary. Since drying processes are costly, it is often preferred for the liquid content of the coagulated mass to be minimized. When cost reduction is preferred, the concentration of liquid in the coagulated mass typically less than 70 weight percent, or less than 50 weight percent, or less than 30 weight percent.

One way of achieving low liquid content in the coagulated mass produced in accordance with the present invention is for the first and second emulsions to have high solids concentrations of the polymeric particles contained therein. Typically, the solids concentration of the first and second emulsions is at least 15 weight percent. However, in one preferred embodiment, the solids concentration of the first and second emulsions is at least 30 weight percent, or at least 45 percent, or at least 60 percent.

In the present invention, after forming the MBS resin, a hard polymer can be added to the slurry so that the hard polymer effectively sticks to the surface of MBS resin particles. The hard polymer to be added may be in the state of latex or in the state of slurry formed by adding an acid or salt as mentioned above to the latex to coagulate the latex. After the addition of the hard polymer to the MBS resin, the temperature is raised to 60 to 100°C to heat-treat the resulting mixture, and the mixture is then dehydrated and dried to give an objective resin powder having an improved powder characteristics. When the hard polymer has been added in the state of latex, the resulting mixture is subjected to the heat treatment, dehydration and drying after coagulating it with an acid or a salt or directly if the mixture is coagulated by merely mixing it.

If used, the amount of the hard polymer typically ranges from 0.1 to 10 parts by weight, preferably 0.5 to 4 parts by weight, per 100 parts by weight of the MBS resin. If the amount of the hard polymer is lowered, the effect of improving the blocking resistance of the MBS resin is small. I f the amount is too large, the physical properties of vinyl

chloride resin molded articles such as transparency can be lowered.

The hard polymers used for imparting a blocking resistance to the MBS resins are not particularly limited. Examples include: polymers comprising methyl methacrylate, an aromatic vinyl monomer, a crosslinking agent and optionally other copolymerizable monomers. If such are employed, the content of methyl methacrylate is preferably from 30 to 60 % by weight, more preferably from 35 to 55 % by weight; the content of the aromatic vinyl monomer is preferably from 35 to 65 % by weight, more preferably from 40 to 50 % by weight; and, the content of the crosslinking agent is preferably from 0.1 to 25 % by weight, more preferably from 0.1 to 10 % by weight, still more preferably from 3 to 7 % by weight.

Other monomers copolymerizable with these monomers may also be used. The content of the other monomers in the hard polymer is from 0 to 30 % by weight, preferably from 0 to 10 % by weight. If the contents of the above monomers do not fall within the respective ranges, not only the blocking resistance is lowered, but also the transparency of final molded articles are lowered since it becomes difficult to match the refraction index of the hard polymer with that of a vinyl chloride resin. From the viewpoint of minimizing the lowering of the transparency, it is preferable that the hard polymers have a refraction index such that the difference between it and a vinyl chloride resin is not more than 0. 1, especially not more than 0.05.

Examples of the aromatic vinyl monomer that can be used in the hard polymers include: styrene, α-methylstyrene, a halogenated styrene and other styrene derivatives. These may be used alone or in combination.

Examples of the crosslinking agent that can be used in the hard polymers include divinyl benzene, 1,3-butylene glycol dimethacrylate, polyethylene glycol dimethacrylate, and other known crosslinking agents such as divinyl compounds, dimethacrylate compounds, diacrylate compounds and diallyl compounds. These may be used alone or in combination.

Examples of the other copolymerizable monomers that can be used in the hard polymers include an alkyl acrylate having a $C_1$ to $C_{12}$ alkyl group, an alkyl methacrylate having a $C_2$ to $C_{12}$ alkyl group, a vinyl cyanide compound such as acrylonitrile or methacrylonitrile, acrylic acid, methacrylic acid, and the like. The other copolymerizable monomers are not limited to these exemplified monomers.

From the viewpoints of the blocking resistance and improving effect and the transparency of vinyl chloride resin molded articles, the average particle size of the hard polymers is usually from 400 to 3,000 Å (40 to 300 nm), and is preferably from 1,000 to 2,500 Å (100 to 250 nm).

The method of the polymerization for the hard polymers is not particularly limited. Emulsion polymerization is preferred from the viewpoint of ease in controlling the average particle size of the polymers. The emulsion polymerization can be conducted in a usual manner and, for example, a polymerization initiator, emulsifier and other additives as mentioned above can be used.

Another embodiment of this invention relates to novel thermoplastic resin compositions which contain a plastic resin component and any of the novel MBS-containing polymeric compositions disclosed herein. Examples of the thermoplastic resins to which the novel polymeric compositions of the present invention are applicable include: polymethyl methacrylate resin, polyvinyl chloride resin polyvinylidene chloride resin, polyethylene resin, polypropylene resin, cyclic olefin copolymer resin, polycarbonate resin, polyester resin, a mixture of polycarbonate resin and polyester resin, a homopolymer or copolymer of 70 to 100% of at least one vinyl monomer selected from the group consisting of an aromatic alkenyl compound, a vinyl cyanide compound and a (meth)acrylic acid ester and 30 to 0% of at least one other monomer copolymerizable therewith, *e.g.,* other vinyl monomer such as ethylene, propylene or vinyl acetate and a conjugated diene monomer such as butadiene or isoprene, polystyrene resin, polyphenylene ether resin, a mixture of polystyrene resin and polyphenylene ether resin, and the like. A wide range of plastic resins are usable without being limited to the exemplified resins. Polymethyl methacrylate resin, polyvinyl chloride resin, polypropylene, cyclic olefin copolymers, polycarbonate resin and polyester resin are particularly preferable since effects of improvement in weatherability, impact resistance and the like are easy to be produced.

In one specific embodiment, the amount of the novel polymeric compositions added to a thermoplastic resin is typically from 50 to 95 parts, and more typically from 60 to 90 parts, per 100 parts of the thermoplastic resin. In this embodiment, the resulting product can be used as a concentrate which is, thereafter, added to a thermoplastic resin producing process to produce a final product.

In another specific embodiment, the amount of the novel polymeric compositions added to a thermoplastic resin is typically from 0.1 to 45 parts, and more typically from 1 to 40 parts, per 100 parts of the plastic resin. In this embodiment, the resulting product is the final product. If the amount of the novel is less than 0.1 part, the impact resistance-improving effect tends to become insufficient, and if the amount is more than 50 parts, the properties of the thermoplastic resin tend to be impaired.

The resulting thermoplastic resin composition may further contain one or more of the following: lubricant, processing aid, rheology modifier, dye, pigment, flame retardant, thermal stabilizer, antioxidant, antiozonant, ultraviolet stabilizer, mold release agent, reinforcing filler or non-reinforcing filler. If present, the reinforcing filler may be least one of the following: glass fibers, glass spheres, talc, or mica. In the case of a polyvinyl chloride resin composition made

in accordance with this embodiment of the invention, the novel resin composition may also contain a heat distortion improver, such as a polyglutarimide.

In one preferred embodiment, the MBS-containing polymeric composition comprises from 0.1 to 10 parts by weight of a hard polymer per 100 parts by weight of the MBS resin, and the plastic resin comprises a vinyl chloride resin. Examples of vinyl chloride resins that can be used in this preferred embodiment include: polyvinyl chloride resin, post-chlorinated polyvinyl chloride resin, partially crosslinked polyvinyl chloride resin, polyvinylidene chloride, copolymers of at least 50 % by weight, especially at least 70 % by weight, of vinyl chloride and a monomer copolymerizable with vinyl chloride such as ethylene, propylene, styrene, vinyl acetate, alkyl acrylates, alkyl methacrylates, vinyl cyanide, vinylidene chloride, an unsaturated acid monomer such as acrylic acid or methacrylic acid, maleic ester, or fumaric ester. The resin powder of this preferred embodiment is usually employed in an amount of 2 to 30 parts by weight per 100 parts by weight of the vinyl chloride resin.

## Claims

**1.** A polymeric composition comprising a methyl methacrylate/butadiene/styrene copolymer (MBS)resin having a butadiene component, wherein the concentration of the butadiene component in the MBS resin is greater than 70 weight percent, and wherein the MBS resin is prepared by:

a. coagulating an MBS resin having the following compositional relationships:

1) $-1.5\mathbf{x} + 140 \leq \mathbf{y} \leq -1.65\mathbf{x} + 180$ , and
2) $55 \leq \mathbf{x} \leq 70$

wherein, **x** is the weight percent of the butadiene component; and wherein **y** is the Vicat softening point of the MBS resin in °C;
b. adding to the coagulated MBS resin a hard polymer in an amount of 0.1 to 10 parts by weight per 100 parts by weight of the coagulated MBS resin; and
c. recovering a powder from the mixture of the coagulated MBS resin and the hard polymer.

**2.** A polymeric composition as recited in claim 1, wherein the butadiene component in the MBS resin ranges from 75 to 95 weight percent.

**3.** A polymeric composition as recited in claim 1, further comprising at least one of the following:

a. a population of polymeric particles, wherein said polymeric particles comprise void-containing rubber portion, wherein the volumetric proportion of the voids defined therein ranges from 1 to 90 percent, and wherein the void-containing rubber portion comprises from 20 to 90 weight percent of the individual polymeric particles,
b. at least 1 weight percent of a processing oil component;
c. at least 2 weight percent of a processing aid component;
d. at least two different populations of polymeric particles, wherein each has a rubber-containing portion, and wherein the difference between the populations is in at least one of the following areas:

1) the void concentration in the rubber-containing portions of each population,
2) the chemical composition of each population,
3) the average particle size of each population, and
4) the shape of each population.

**5.** A polymeric composition comprising:

a. a methyl methacrylate/butadiene/styrene copolymer (MBS)resin having a butadiene component, wherein the concentration of the butadiene component in the MBS resin ranges from 30 to 70 weight percent, wherein the MBS resin is prepared by:

1) coagulating an MBS resin having the following compositional relationships:

a) $-1.5\mathbf{x} + 140 \leq \mathbf{y} \leq -1.65\mathbf{x} + 180$ , and
b) $55 \leq \mathbf{x} \leq 70$

wherein, **x** is the weight percent of the butadiene component; and wherein **y** is the Vicat softening point of the MBS resin in °C;
2) adding to the coagulated MBS resin a hard polymer in an amount of 0.1 to 10 parts by weight per 100 parts by weight of the coagulated MBS resin; and
3) recovering a powder from the mixture of the coagulated MBS resin and the hard polymer; and

b. at least one of the following:

1) a population of polymeric particles, wherein said polymeric particles comprise void-containing rubber portion, wherein the volumetric proportion of the voids defined therein ranges from 1 to 90 percent, and wherein the void-containing rubber portion comprises from 20 to 90 weight percent of the individual polymeric particles,
2) at least 1 weight percent of a processing oil component;
3) at least 2 weight percent of a processing aid component;
4) at least two different populations of polymeric particles,

wherein each has a rubber-containing portion, and wherein the difference between the populations is in at least one of the following areas:

a) the void concentration in the rubber-containing portions of each population,
b) the chemical composition of each population,
c) the average particle size of each population, and
d) the shape of each population.

**6.** A polymeric composition as recited in claim 5, wherein the concentration of the butadiene component in the MBS resin ranges from 55 to 70 weight percent.

**7.** A polymeric composition as recited in claim 5, wherein MBS resin has the following compositional relationships:

a) $-1.2\mathbf{x} + 128 \leq \mathbf{y} \leq -1.65\mathbf{x} + 180$ , and
b) $55 \leq \mathbf{x} \leq 70$ .

**8.** A thermoplastic resin systems comprising a plastic resin component and an impact modifier component, wherein the impact modifier component comprises a polymeric composition comprising an MBS resin having a butadiene component, wherein the concentration of the butadiene component in the MBS resin is greater than 70 weight percent, and wherein the MBS resin is prepared by:

a. coagulating an MBS resin having the following compositional relationships:

1) $-1.5\mathbf{x} + 140 \leq \mathbf{y} \leq -1.65\mathbf{x} + 180$ , and
2) $55 \leq \mathbf{x} \leq 70$ ,

wherein, **x** is the weight percent of the butadiene component; and wherein **y** is the Vicat softening point of the MBS resin in °C;
b. adding to the coagulated MBS resin a hard polymer in an amount of 0.1 to 10 parts by weight per 100 parts by weight of the coagulated MBS resin; and
c. recovering a powder from the mixture of the coagulated MBS resin and the hard polymer.

**9.** A thermoplastic resin systems comprising a plastic resin component and an impact modifier component, wherein the impact modifier component comprises:

a. a polymeric composition comprising an MBS resin having a butadiene component, wherein the concentration of the butadiene component in the MBS resin ranges from 30 to 70 weight percent, and wherein the MBS resin is prepared by:

1) coagulating an MBS resin having the following compositional relationships:

a) $-1.5\mathbf{x} + 140 \leq \mathbf{y} \leq -1.65\mathbf{x} + 180$ , and

b) $55 \leq \mathbf{x} \leq 70$ ,

wherein, **x** is the weight percent of the butadiene component; and wherein **y** is the Vicat softening point of the MBS resin in °C;
2) adding to the coagulated MBS resin a hard polymer in an amount of 0.1 to 10 parts by weight per 100 parts by weight of the coagulated MBS resin; and
3) recovering a powder from the mixture of the coagulated MBS resin and the hard polymer; and

b. at least one of the following:

1) a population of polymeric particles, wherein said polymeric particles comprise void-containing rubber portion, wherein the volumetric proportion of the voids defined therein ranges from 1 to 90 percent, and wherein the void-containing rubber portion comprises from 20 to 90 weight percent of the individual polymeric particles,
2) at least 1 weight percent of a processing oil component;
3) at least 2 weight percent of a processing aid component;
4) at least two different populations of polymeric particles,

wherein each has a rubber-containing portion, and wherein the difference between the populations is in at least one of the following areas:

a) the void concentration in the rubber-containing portions of each population,
b) the chemical composition of each population,
c) the average particle size of each population, and
d) the shape of each population.

**10.** A thermoplastic resin system as recited in claim 9, wherein the plastic resin component comprises a vinyl chloride resin.

European Patent Office

# EUROPEAN SEARCH REPORT

Application Number
EP 03 25 5012

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,D | EP 1 086 989 A (KANEGAFUCHI CHEMICAL IND) 28 March 2001 (2001-03-28) * abstract; claims; examples * ----- | 1-3,5-10 | C08L51/04 C08L27/06 |
| A | EP 1 008 622 A (ROHM & HAAS) 14 June 2000 (2000-06-14) * abstract; claims; examples * ----- | 1-3,5-10 | |
| | | | TECHNICAL FIELDS SEARCHED (Int.Cl.7) |
| | | | C08L |

The present search report has been drawn up for all claims

| Place of search | Date of completion of the search | Examiner |
|---|---|---|
| The Hague | 8 December 2003 | Mettler, R-M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 03 25 5012

This annex lists the patent family membersrelating to the patent documents cited in the above-mentioned European search report.
The members are as contained in the European Patent Office EDP file on
The European Patent Office is in no way liable for these particulars which are merely given for the purpose of information.

08-12-2003

| Patent document cited in search report | Publication date | Patent family member(s) | Publication date |
|---|---|---|---|
| EP 1086989 A | 28-03-2001 | JP 2000273258 A | 03-10-2000 |
| | | AU 761313 B2 | 05-06-2003 |
| | | AU 3325400 A | 16-10-2000 |
| | | CA 2329840 A1 | 05-10-2000 |
| | | DE 60004616 D1 | 25-09-2003 |
| | | EP 1086989 A1 | 28-03-2001 |
| | | US 6407173 B1 | 18-06-2002 |
| | | CN 1296513 T | 23-05-2001 |
| | | WO 0058399 A1 | 05-10-2000 |
| EP 1008622 A | 14-06-2000 | CN 1256289 A | 14-06-2000 |
| | | EP 1008622 A1 | 14-06-2000 |
| | | JP 2000169740 A | 20-06-2000 |
| | | KR 2000047718 A | 25-07-2000 |

EPO FORM P0459

For more details about this annex : see Official Journal of the European Patent Office, No. 12/82